# EUROPEAN PATENT APPLICATION

(11) **EP 2 596 902 A1**
(43) Date of publication of application: **29.05.2013**
(21) Application number: 12193856.7
(22) Date of filing: 22.11.2012
(51) Int. Cl.: B23K 37/00, B23P 15/00, C21D 3/04, F01D 5/06

(54) **Method for decarburization of a rotor forging**

(30) Priority: 28.11.2011 US 201113305371
(71) Applicant: General Electric Company, Schenectady, New York 12345 (US)
(72) Inventor: Witney, Andrew Batton, Schenectady, NY New York 12345 (US); Spiegel, Lyle B., Schenectady, NY New York 12345 (US)
(74) Representative: Cleary, Fidelma

(57) **Abstract**

Disclosed herein is a method for decarburization of a rotor forging (100). In one aspect, a location for applying a weld prep to a rotor forging (100) is identified. The rotor forging (100) is decarburized at the identified location of the weld prep to attain a predetermined carbon content.

## Description

### BACKGROUND OF THE INVENTION

The present invention relates generally to rotor forgings, and more particularly to decarburization of a rotor forging at a weld prep location to obtain a customizable carbon content.

Turbine and generator rotors can be formed from single forgings, or by welding together smaller forgings. As is generally the case when welding steels, high levels of carbon can present weldability problems. In the case of a welded turbine or generator rotor, such weldability problems are particularly difficult to overcome during the critical first several weld passes when constraint is high and little filler metal has been deposited. As is well known, a carbon content always makes steel more difficult to weld, and as a general rule-of-thumb, any carbon concentration above 0.2% by weight requires special precautions to avoid cracking. Since turbine and generator rotors may require alloys with such high levels of carbon in order to attain the requisite strength for operation in service, measures must be taken to improve the weldability of these alloys. One approach is to coat or butter the forgings at the locations where they are to be joined with a more weldable steel composition. After buttering, weld prep surfaces are machined on each forging, and the forgings are subsequently welded together. Following this approach, the steel at the weld location is more weldable. That is, there is lower carbon content and the material remote from the weld location is the less-weldable forging alloy.

### BRIEF DESCRIPTION OF THE INVENTION

In one aspect of the present invention, there is a method that comprises: obtaining a rotor forging; identifying a location for applying a weld prep to the rotor forging; and decarburizing the rotor forging at the identified location for the weld prep.

In another aspect of the present invention, a method for decarburizing a turbine rotor forging is disclosed. The method comprises: obtaining the turbine rotor forging; identifying a location for applying a weld prep to the turbine rotor forging, the identified location forming a root path for welding the turbine rotor forging to another turbine rotor forging; and decarburizing the identified weld prep location of the turbine rotor forging to change the properties of the rotor forging at the identified weld prep location to have a predetermined carbon content.

### BRIEF DESCRIPTION OF THE DRAWINGS

Embodiments of the present invention will now be described, by way of example only, with reference to the accompanying drawings in which:
FIG. 1 is a schematic diagram of a rotor forging that may be decarburized according to one embodiment of the present invention for welding to another similarly decarburized rotor forging;
FIG. 2 is a schematic diagram showing the welding of two rotor forgings that have been decarburized according to one embodiment of the present invention to form a rotor;
FIG. 3 is a schematic of an envelope illustrating a weld prep rough machined to a rotor forging that may be decarburized according to one embodiment of the present invention;
FIG. 4 is a flow chart illustrating a process operation associated with decarburizing a rotor forging according to one embodiment of the present invention; and
FIG. 5 is a flow chart illustrating a process operation associated with decarburizing a rotor forging according to another embodiment of the present invention.

### DETAILED DESCRIPTION OF THE INVENTION

Various embodiments of the present invention are directed to decarburization of rotor forgings in order to enhance their weldability. In one embodiment, the decarburization comprises placing rotor forgings in a heating unit having an atmosphere tailored to increase the thermodynamic driving force for the diffusion of carbon from the forgings. In another embodiment, the decarburization comprises applying a slurry containing elements and compounds with a high affinity for carbon ("carbide formers") to the rotor forgings. In one embodiment, the decarburization can include simultaneously placing rotor forgings in a heating unit having an atmosphere tailored to increase the thermodynamic driving force for the diffusion of carbon from the forgings and applying a slurry containing elements and compounds with a high affinity for carbon ("carbide formers") to the rotor forgings. The rotor forgings may be decarburized at several stages during the rotor manufacturing process. Regardless of when decarburization occurs, upon heating it causes carbon to diffuse to the surface to form gaseous carbon compounds such as carbon monoxide or carbon dioxide, hydrocarbons such as methane, and may cause adhering carbide or oxide scales to form that can be easily removed.

Technical effects of the various embodiments of the present invention include enabling rotor manufacturers to produce rotor forgings with a customizable carbon content at the location of the weld prep that enhances the weldability of the forgings without compromising the alloy at locations remote from the weld. The capability to produce weld preps with a customizable carbon content enables rotor manufacturers to standardize their weld processes and ensure uniformity in weld quality from one fabrication to the next. In addition, rotor forging alloys are produced according to specifications that allow a range of carbon content (for example from about 0.15% to about 0.20%), so the capability to customize the carbon content at a weld prep allows rotor manufacturers to use forging precursor material that has been produced with any carbon content within the allowed range without adversely affecting weldability at the critical weld location.

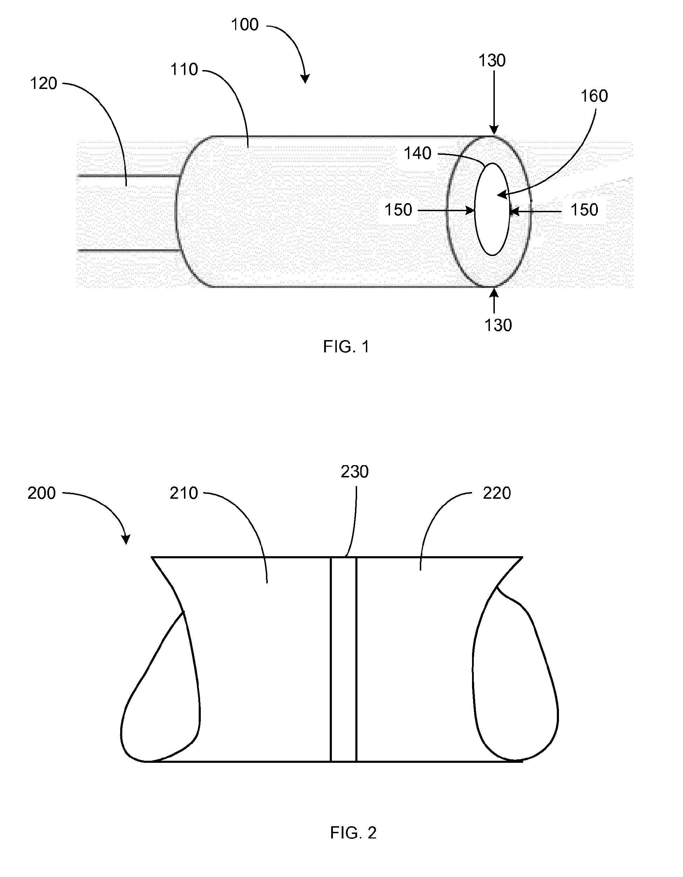

Referring to the drawings, FIG. 1 is a schematic diagram of a rotor forging 100 that may be decarburized according to one embodiment of the present invention. Although the description that follows pertains to rotor forgings that are machined and welded to form a steam turbine rotor of varying sections (e.g., a high pressure (HP) rotor section, an intermediate pressure (IP) rotor section and a low pressure (LP) rotor section), those skilled in the art will appreciate that the various embodiments directed to decarburization of the rotor forgings have utility beyond steam turbine rotors. For example, the various embodiments of the present invention may be suitable for high strength steel alloys that are used to produce generator rotors, jet engines, etc. In general, the various embodiments of the present invention may have applicability to any scenario where it is desirable to minimize the carbon content of steel alloys to enhance their weldability.

In one embodiment, rotor forging 100 comprises a monolithic forging having an affected region 110 that will be subjected to the decarburization procedure, and an unaffected region 120 that will not be subjected to decarburization. The affected region 110 and unaffected region 120 of rotor forging 100 are shown in FIG. 1 before rough machining one of a number of possible features (e.g., coupling flanges, blade attachment locations, and weld preparations). As explained below, various embodiments of the present invention can be directed to a rotor forging that has been rough machined to define a number of features or to an as-forged rotor that has been minimally machined. Rotor forging 100 may be produced by any of a well-known number of approaches to produce a part with desired alloy chemistry and properties (e.g., tensile strength, fracture toughness, rupture strength, thermal stability, etc.) An open-die forging process applied to ingots produced by methods such as electro-slag remelting or vacuum arc remelting is one example that may be used to produce rotor forging 100. Examples of alloy chemistries that may be used to form rotor forging 100 include but are not limited to CrMoV low alloy steels (typically used in HP rotor sections), NiCrMoV low alloy steels (typically used in LP rotor sections) and high-chromium martensitic/bainitic stainless steels.

Referring back to FIG. 1, rotor forging 100 has an outer diameter represented by arrows 130 and a contoured central portion 140 having an inside diameter represented by arrows 150. An annular surface 160 defined by these inside and outside diameters contains the location in which a weld prep is to be machined to facilitate welding of forging 100 with another similarly prepared rotor forging. As explained below, the decarburization of rotor forging 100 according to one embodiment of the present invention is focused in the vicinity where the weld prep is located.

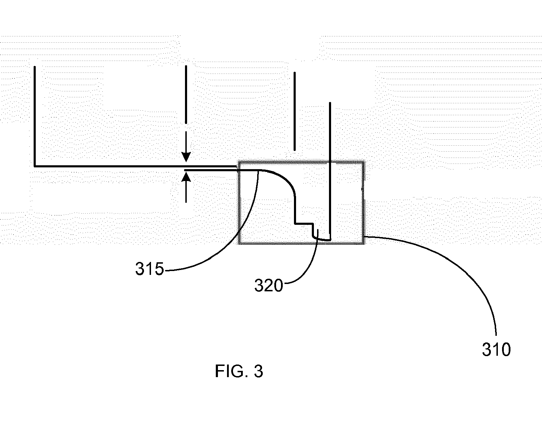

FIG. 2 is a schematic diagram showing the welding of two rotor forgings in which one or both have been decarburized according to one embodiment of the present invention to form a rotor. In particular, FIG. 2 shows a schematic of a rotor 200 formed from welding a first rotor forging 210 to a second rotor forging 220 at a weld 230. Generally, weld 230 includes a first weld pass (not shown) about each of the forging's central portion (inside diameter) that consumes their respective weld prep. Referring to FIG. 3, there is an example of what a weld prep may look like. Each rotor forging 210 and 220 would at the time of welding have machined surfaces similar to weld prep 310 illustrated in FIG. 3. The first pass consumes feature 320 along a circumferential of the root path or root weld and joins rotor forging 210 to rotor forging 220 at the bottom of groove 315. The U-shaped narrow groove (the top half as shown in FIG. 3) represents where the weld filler material would be placed on passes subsequent to the root pass when joining one forging to another. Referring back to FIG. 2, weld 230 further includes a plurality of subsequent weld passes (not shown) that begin on top of the root pass and fill to the outside diameter the groove formed between rotor forging 210 and rotor forging 220.

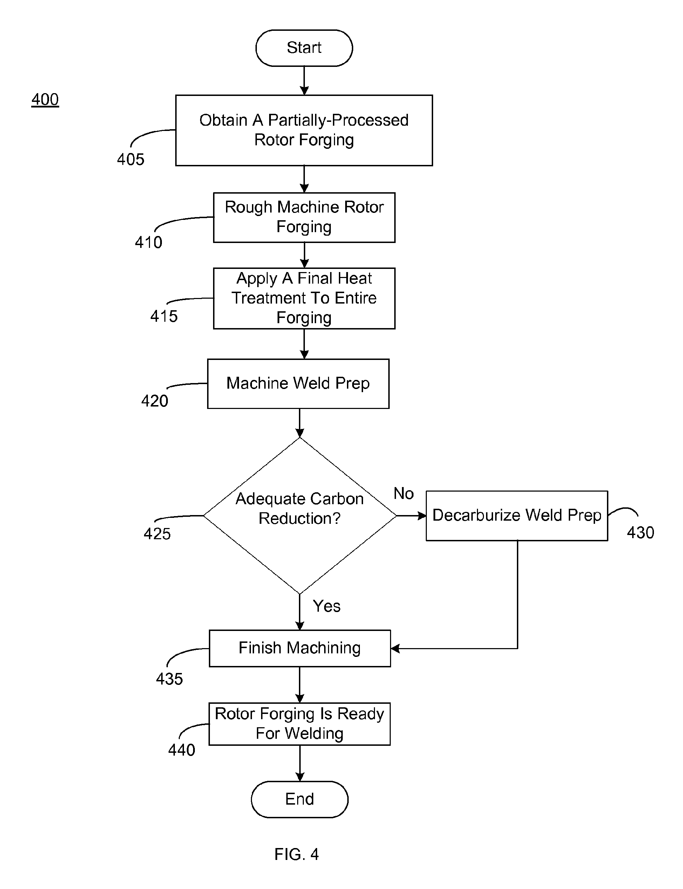

FIG. 4 is a flow chart 400 illustrating a process operation associated with decarburizing a rotor forging according to one embodiment of the present invention. In FIG. 4, the process operations begin at 405 where a partially-processed rotor forging is obtained. The rotor forging is partially-processed in that not all of the processing and heat treatments have been performed to bring the properties of the forging into specification. In this embodiment, the partially-processed rotor forging may be formed from various combinations of alloy chemistries that allow varying sections of the forging to achieve certain mechanical and physical properties. In particular, the partially-processed rotor forging may be formed from alloy chemistries that include but are not limited to CrMoV low alloy steels, NiCrMoV low alloy steels, NiMoV alloy steels, and high-chromium martensitic/bainitic stainless steels.

Continuing with flow chart 400, the partially-processed rotor forging is rough machined at 410 to expose a surface that will eventually be machined into a weld prep that forms the root path or root weld for joining the rotor forging to another rotor forging. This "rough machining" may be no more elaborate than simply cutting off one end of the rotor forging, and exposing a circular surface that will eventually be machined for a weld prep. Or, it may involve more machining steps that work the surface more closely to the eventual shape of the weld prep. In addition to rough machining the rotor forging to expose a surface that will eventually be machined into a weld prep, those skilled in the art will appreciate that the rough machining can be used to define one of a number of turbine sections (e.g., gashes that define various turbine stages) and define rotor sections.

At 415, a final heating treatment is applied to the entire rough-machined rotor forging, including the location where the weld prep will be. In one embodiment, a heating unit such as a furnace with multiple temperature zones may be used to provide an appropriate heat treatment temperature to the entire rough-machined rotor forging. The heat treatment may include various steps for the austenitizing, solutionizing, aging, tempering, etc., treatment of the particular alloys. Particular heating units, temperatures, durations, and heating rates suitable for the heat treatment will depend on the materials used, and such heat treatment parameters are within the capability of those skilled in the art. During the austenitizing part of this heat treatment, any exposed surface will naturally decarburize to some extent. The rough machining of the rotor forging at 410 ensures that locations where there eventually will be weld prep(s) benefit from this natural decarburization that occurs during the austenitizing. Since the entire rotor forging is being heated up at this point, it is also possible to supplement the natural decarburization that happens to all exposed surfaces during the austenitizing part of this heat treatment by including some specific decarburization operations to the weld prep location. Decarburization of the weld prep location allows one to attain a rotor forging with a customizable carbon content at the area where the forging is to be welded. As a result, the rotor forging will have a lower carbon content at the weld prep than areas in the forging remote from the weld prep (where there will be a higher carbon content). Lower carbon content at the weld prep enhances weldability.

In one embodiment, the decarburization of the weld prep that may be supplemented with the heat treatment that occurs at 415 may include applying a slurry, paste, or similar coating (collectively referred to as a slurry) rich in elements that have a high affinity for carbon ("carbide-forming" elements) to the forging at the weld prep location. In one embodiment, the slurry may comprise carbon reactive elements including but not limited to chromium, molybdenum, vanadium, tantalum, tungsten, or titanium. In one embodiment, the weld prep would be brushed with the slurry of carbide-forming elements and then heated per the heat treatment of 415. The combination of the slurry applied to the weld prep and the heat treatment applied to the weld prep enhances carbon diffusion from the alloy used to form the forging to the surface of the alloy. As the carbon diffuses to the surface of the forging, it reacts with compounds present in the atmosphere of the furnace to form gaseous carbon compounds such as carbon monoxide or carbon dioxide, hydrocarbons such as methane, and may form adhering carbide or oxide scales that can be removed from the weld prep using one of a number of well-known descaling techniques.

After the heat treatment and supplemental decarburization, the rotor forging is cooled using any one of a number a well-known cooling techniques (e.g., differential cooling, rapid cooling, slow cooling, etc.) so that the rotor forging can be machined with the weld prep at 420. Those skilled in the art will appreciate that the weld prep can be machined using one of a number of well-known machining techniques.

After machining the weld prep, it is determined at 425 whether an adequate amount of carbon has been removed from the rotor forging during the decarburization performed at the heat treatment of 415. If an adequate amount of carbon has not been removed, then another decarburization operation is performed at 430. In one embodiment, the decarburization of the weld prep at 430 may include placing the rotor forging in a heating unit such as a furnace having an atmosphere tailored to increase the thermodynamic driving force for the diffusion of carbon from the forging. Those skilled in the art will appreciate that the furnace is only illustrative of one possible heating unit that may used and is not meant to limit the various embodiments of the present invention. For example, other possible heating units may include induction, lasers, or other methods that focus heat at specific location. In this embodiment, the location of the weld prep would be heated using a heating element (e.g. induction coils), while efforts would be made to prevent significant heating of the remainder of the forging (e.g. chill blocks). The combination of the atmosphere and the heat treatment applied to the weld prep causes carbon to be drawn from the alloy used to form the forging and react with the atmosphere. As the carbon diffuses to the surface of the forging, it reacts with compounds present in the atmosphere of the furnace to form gaseous carbon compounds such as carbon monoxide or carbon dioxide, hydrocarbons such as methane, and may form adhering carbide or oxide scales that can be removed from the weld prep using one of a number of well-known descaling techniques. The decarburization process could be repeated again until the desired carbon content had been reached. In this embodiment, during decarburization, the atmosphere of the furnace may be refreshed or modified if necessary.

In another embodiment, the decarburization performed at 430 may include applying a slurry, paste, or similar coating (collectively referred to as a slurry) rich in elements that have a high affinity for carbon ("carbine-forming" elements) to the forging at the location that is to be decarburized. In one embodiment, the slurry comprises carbon reactive elements including but not limited to chromium, molybdenum, vanadium, tantalum, tungsten, or titanium. In one embodiment, the weld prep would be brushed with the slurry of carbide-forming elements and then heated. As in the embodiment that uses a furnace with a tailored atmosphere, the slurry would be heated using a heating element (e.g. induction coils). The combination of the slurry applied to the weld prep and the heat treatment applied to the weld prep enhances carbon diffusion and carbide formation at the surface of the metal. In the case that these carbides form an adhering scale, a descaling technique could then be used to remove it from the weld prep. This process could be repeated if desired.

After decarburizing the weld prep according to one of the aforementioned steps, the machining of the rotor forging can then be finished at 435. As shown in FIG. 4, the finishing of machining of step 435 can be reached if it is determined at 425 that an adequate amount of carbon has been removed. In any event, any decarburization step whether performed in heat treatment step 415 or the specific decarburization step 430 may leave behind a scale at the heated surfaces. A final machining will remove the "envelope" metal from the forging and machine the final weld prep to a desired tight tolerance.

After final machining of the forging including the weld prep, the rotor forging is then ready for welding at 440.

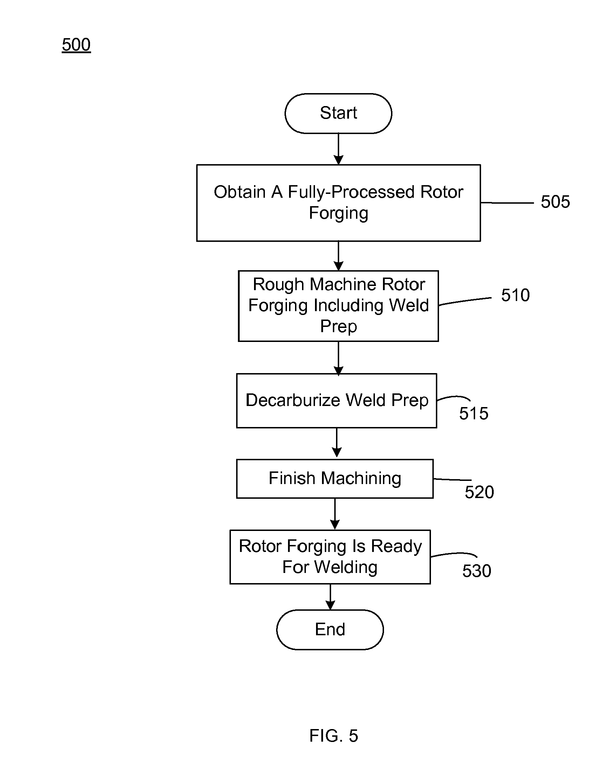

FIG. 5 is a flow chart 500 illustrating a process operation associated with decarburizing a rotor forging according to another embodiment of the present invention. In FIG. 5, the process operations begin at 505 where a fully-processed rotor forging is obtained. The rotor forging is fully-processed in that all of the processing and heat treatments have been performed to bring the properties of the forging into specification. In this embodiment, the fully-processed rotor forging may be formed from various combinations of alloy chemistries that allow varying sections of the forging to achieve certain mechanical and physical properties. In particular, the fully-processed rotor forging may be formed from alloy chemistries that include but are not limited to CrMoV low alloy steels, NiCrMoV low alloy steels, NiMoV alloy steels, and high-chromium martensitic/bainitic stainless steels.

Continuing with flow chart 500, the fully-processed rotor forging including the weld prep is rough machined at 510. The rough machining performed at 510 exposes an "envelope" of material that closely approximates where a weld prep will eventually be that forms the root path or root weld for joining the rotor forging to another rotor forging. This ensures that the decarburization that is performed later penetrates as much of the area that will be welded as possible. The closer the weld prep is to its eventual shape during decarburization, the more effective the decarburization is. In addition to rough machining the rotor forging to expose the envelope of where the weld prep will eventually be, those skilled in the art will appreciate that the rough machining can be used to define one of a number of turbine sections (e.g., gashes that define various turbine stages) and define rotor sections.

The specific location of the envelope for the weld prep is then decarburized at 515. As mentioned above, decarburization of the weld prep allows one to attain a rotor forging with a customizable carbon content at the area where the forging is to be welded. As a result, the rotor forging will have a lower carbon content at the weld prep than areas in the forging remote from the weld prep (where there will be a higher carbon content). Lower carbon content at the weld prep enhances weldability.

In one embodiment, the decarburization of the weld prep may include placing the rotor forging in a heating unit such as a furnace having an atmosphere tailored to increase the thermodynamic driving force for the diffusion of carbon from the forgings. Those skilled in the art will appreciate that the furnace is only illustrative of one possible heating unit that may used and is not mean to limit the various embodiments of the present invention. For example, other possible heating units may include induction, lasers, or other methods that focus heat at specific location. In this embodiment, the location of the weld prep could be heated using a heating element (e.g. induction coils), while efforts would be made to prevent significant heating of the remainder of the forging (e.g. chill blocks). The combination of the atmosphere and the heat treatment applied to the weld prep causes carbon to be drawn from the alloy used to form the forging and react with the atmosphere. As the carbon diffuses to the surface of the forging, it reacts with compounds present in the atmosphere of the furnace to form gaseous carbon compounds such as carbon monoxide or carbon dioxide, hydrocarbons such as methane, and may cause adhering carbide or oxide scales that can be removed from the weld prep using one of a number of well-known descaling techniques. The decarburization process could be repeated until the desired carbon content had been reached. In this embodiment, during decarburization, the tailored atmosphere of the furnace may be refreshed or modified if necessary.

In another embodiment, the decarburization may include applying a slurry, paste, or similar coating (collectively referred to as a slurry) rich in elements that have a high affinity for carbon ("carbide-forming" elements) to the forging at the location that is to be decarburized. In one embodiment, the slurry comprises carbide-forming elements including but not limited to chromium, molybdenum, vanadium, tantalum, tungsten, or titanium. In one embodiment, the weld prep would be brushed with the slurry of carbide-forming elements and then heated. As in the embodiment that uses a furnace with a tailored environment, the slurry would be heated using a heating element (e.g. induction coils). The combination of the slurry applied to the weld prep and the heat treatment applied to the weld prep enhances carbon diffusion and carbide formation at the surface of the metal. In the case that these carbides form an adhering scale, a descaling technique could then be used to remove it from the weld prep. This process could be repeated if desired.

After decarburizing the weld prep according to one the aforementioned steps, the machining of the rotor forging can then be finished at 520. As mentioned above, the final machining will remove the "envelope" metal from the forging and machine the final weld prep to a desired tight tolerance. After final machining of the forging including the weld prep, the rotor forging is then ready for welding at 530.

The foregoing flow charts of FIGS. 4-5 show some of the processing functions associated with decarburizing a rotor forging according to various embodiments of the present invention. In this regard, each block represents a process act associated with performing these functions. It should also be noted that in some alternative implementations, the acts noted in the blocks may occur out of the order noted in the figures or, for example, may in fact be executed substantially concurrently or in the reverse order, depending upon the act involved. Also, one of ordinary skill in the art will recognize that additional blocks that describe the processing functions may be added.

The approach associated with the approach described in FIG. 5 can be much more focused and customized than the approach described in FIG. 4. In the approach described in FIG. 4, the atmosphere, times and temperatures of heat treatment are dictated by what works to get the forging properties correct (the decarburization mostly "comes along for the ride.") The approach associated with FIG. 5 allows a wider range of temperatures, times, atmospheres, etc., in comparison to the approach associated with FIG. 4 and can also be performed repeatedly until the desired degree of decarburization is achieved.

Note that a forging that has been decarburized according to the approach described in FIG. 4 can also be later further decarburized by the approach described in FIG. 5. Furthermore, it is also worth mentioning that some welded-rotor designs may comprise more than two forgings (i.e. more than one weld joint). So, it may sometimes be desirable to decarburize two weld prep locations on the same forging (one on each end of the central section in the case of a 3-piece welded rotor, for example).

Regardless of the particular embodiment(s) followed to decarburize the forging, the various embodiments of this invention can be used not only to enhance the weldability of material at the locations of critical welds by reducing the carbon content locally, but also to customize the carbon content. A customized carbon content may be desirable from the standpoint of process robustness. Though a forging material itself may specify a fairly wide range of allowable carbon content (e.g. 0.11-0.28% by weight), it may be desirable to ensure that root passes and other critical welding is always performed on material with the same amount of carbon within, or below that range (e.g. the forging can have any carbon level from 0.11-0.28%, but it may be desirable to specify that critical welding shall only be performed at locations that have been decarburized to below 0.10%). By application of the decarburizing methods taught in the various embodiments of the present invention, the carbon level at a weld location of any rotor forging can be reduced to that level, regardless of the starting carbon content.

While the disclosure has been particularly shown and described in conjunction with a preferred embodiment thereof, it will be appreciated that variations and modifications will occur to those skilled in the art. Therefore, it is to be understood that the appended claims are intended to cover all such modifications and changes as fall within the true spirit of the disclosure.

## Claims

1. A method, comprising:
obtaining (410, 505) a rotor forging (100);
identifying a location for applying a weld prep (310) to the rotor forging (100); and
decarburizing (430, 515) the rotor forging (100) at the identified location for the weld prep (310).

2. The method according to claim 1, wherein the decarburizing (430, 515) comprises placing the rotor forging (100) in a heating unit having an atmosphere tailored to increase a thermodynamic driving force for diffusion of carbon from the forging (100).

3. The method according to claim 1 or 2, wherein the decarburizing comprises applying a slurry that comprises elements and compounds with a high affinity for carbon.

4. The method according to any of claims 1 to 3, wherein the decarburizing of the rotor forging (100) causes carbon in the forging to diffuse to the surface to form a scale thereon.

5. The method according to claim 4, further comprising removing the scale from the surface of the rotor forging (100).

6. The method according to any of claims 1 to 5, wherein the decarburizing of the rotor forging (100) at the identified location for the weld prep (310) comprises selectively decarburizing the weld prep (310) to have a lower carbon content than a carbon content of a region in the rotor forging (100) that is remote from the weld prep (310) location.

7. The method according to any preceding claim, wherein the rotor forging (100) has been partially or fully processed, prior to being obtained.

8. The method according to claim 7, further comprising rough machining (410) the partially or fully processed rotor forging (100) to expose a surface or an envelope that will eventually be machined into the weld prep (310).

9. The method according to claim 8, when the rotor forging has been partially processed and further comprising applying (415) a heat treatment to the rough-machined rotor forging (100), wherein the heat treatment is used to perform the decarburization.

10. The method according to claim 9, further comprising machining (435) the weld prep (310) after applying the heat treatment.

11. The method according to claim 10, further comprising decarburizing (430) the machined weld prep (310) in response to determining (425) that the machined prep contained a non-desirable carbon content.

12. The method according to claim 8, wherein the rotor forging has been fully processed and wherein decarburizing occurs after rough machining the fully processed rotor forging.

13. A rotor forging made from the method of any preceding claim, having a customizable carbon content.

14. A method for decarburizing a turbine rotor forging, comprising:
obtaining (410, 505) the turbine rotor forging (100);
identifying a location for applying a weld prep (310) to the turbine rotor forging (100), the identified location forming a root path for welding the turbine rotor forging (100) to another turbine rotor forging; and
decarburizing (450) the identified weld prep location of the turbine rotor forging (100) to change the properties of the rotor forging at the identified weld prep location to have a predetermined carbon content.

15. The method according to claim 14, wherein the decarburizing comprises placing the turbine rotor forging (100) in a furnace having an atmosphere tailored to increase a thermodynamic driving force for diffusion of carbon from the forging and applying a heat treatment focused on the identified weld prep location.

16. The method according to claim 14 or 15, wherein the decarburizing comprises applying a slurry containing elements and compounds with a high affinity for carbon to the identified weld prep location.

17. The method according to claims 14 to 16, wherein the decarburizing comprises applying a slurry containing elements and compounds with a high affinity for carbon to the identified weld prep (310) location, placing the turbine rotor forging (100) in a furnace having an atmosphere tailored to increase a thermodynamic driving force for the diffusion of carbon from the forging (100) and applying a heat treatment focused on the identified weld prep location.
